(19) Europäisches Patentamt
European Patent Office
Office européen des brevets

(11) **EP 4 734 176 A1**

(12) **EUROPEAN PATENT APPLICATION**
published in accordance with Art. 153(4) EPC

(43) Date of publication:
**29.04.2026 Bulletin 2026/18**

(21) Application number: **24902439.9**

(22) Date of filing: **06.11.2024**

(51) International Patent Classification (IPC):
$H01M\ 4/36^{(2006.01)}$    $H01M\ 4/58^{(2010.01)}$
$H01M\ 4/525^{(2010.01)}$    $H01M\ 4/505^{(2010.01)}$
$H01M\ 4/136^{(2010.01)}$    $H01M\ 4/131^{(2010.01)}$
$H01M\ 10/0525^{(2010.01)}$

(52) Cooperative Patent Classification (CPC):
Y02E 60/10

(86) International application number:
**PCT/CN2024/130050**

(87) International publication number:
**WO 2025/124015 (19.06.2025 Gazette 2025/25)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **15.12.2023  CN 202311731060**

(71) Applicants:
• **ZHEJIANG ZEEKR INTELLIGENT TECHNOLOGY CO., LTD.**
  **Ningbo, Zhejiang 315899 (CN)**
• **VIRIDI E-MOBILITY TECHNOLOGY (NINGBO) CO., LTD.**
  **Ningbo, Zhejiang 315336 (CN)**

• **Zhejiang Geely Holding Group Co., Ltd.**
  **Hangzhou, Zhejiang 310051 (CN)**

(72) Inventors:
• **WANG, Jiejie**
  **Ningbo, Zhejiang 315899 (CN)**
• **DU, Peng**
  **Ningbo, Zhejiang 315899 (CN)**
• **PAN, Fuzhong**
  **Ningbo, Zhejiang 315899 (CN)**
• **GAO, Tianchang**
  **Ningbo, Zhejiang 315899 (CN)**

(74) Representative: **Elzaburu S.L.P.**
  **Edificio Torre de Cristal**
  **Paseo de la Castellana 259 C, planta 28**
  **28046 Madrid (ES)**

(54) **POSITIVE ELECTRODE MATERIAL, POSITIVE ELECTRODE SHEET AND LITHIUM ION BATTERY**

(57)    A positive electrode material, a positive electrode sheet and a lithium ion battery. The positive electrode material is obtained by mixing a lithium manganese iron phosphate material and a ternary material. During mixing, a mass ratio n of the ternary material to the lithium manganese iron phosphate material in the positive electrode material is determined according to a range of a ratio k of an actual specific capacity of the ternary material to an actual specific capacity of the lithium manganese iron phosphate material. Specifically, when k is less than or equal to 1.34, n is 1 to 9; and when k is greater than 1.34, n is 0.1 to 1, so as to avoid the following situations: due to an improper mixing ratio of the two materials, a lithium ion battery prepared using the positive electrode material is prone to problems such as low capacity retention, low cycle retention, and severe gas generation during cycling. The lithium ion battery prepared from the positive electrode material may have high energy density, high capacity retention rate, good cycle performance and good safety performance at the same time.

**Description**

**TECHNICAL FIELD**

The present disclosure relates to the technical field of lithium ion battery, in particular to a positive electrode material, a positive electrode sheet, and a lithium ion battery.

**BACKGROUND**

Lithium manganese iron phosphate combines safety and low cost. By using dissolved manganese to increase the voltage platform, its energy density can be improved by 10% to 20%, but this sacrifices the material's cycle and rate performance. Currently, not only is the content of dissolved manganese inconsistent, but there is also no fixed method for its application. Ternary materials are more expensive. Compared to high-nickel ternary materials, medium-nickel ternary materials have lower energy density. They typically improve energy density by increasing voltage at the expense of long-term performance. High-nickel ternary materials have even higher energy density, but their safety performance currently limits their rapid application.

A composite cathode system formed by blending lithium manganese iron phosphate and ternary materials can achieve a balanced energy density and safety performance. However, currently, for positive electrode materials obtained by mixing lithium manganese iron phosphate and ternary materials, when the mixing ratio of these two materials is improper, lithium ion batteries prepared using the positive electrode material are prone to problems such as low capacity retention, low cycle retention, and relatively high gas generation during cycling. In addition, for positive electrode materials obtained by mixing lithium manganese iron phosphate and ternary materials, lithium ion batteries prepared using the positive electrode material are difficult to simultaneously have suitable energy density, relatively high capacity retention, relatively high cycle retention, and relatively low gas generation during cycling.

**SUMMARY**

Technical problems addressed by the present disclosure include at least one of the following problems: (1) for a positive electrode material obtained by mixing lithium manganese iron phosphate and a ternary material, when a mixing ratio of the two materials is improper, a lithium ion battery prepared using the positive electrode material is prone to problems such as low capacity retention, low cycle retention, and relatively high gas generation during cycling; and (2) for a positive electrode material obtained by mixing lithium manganese iron phosphate and a ternary material, a lithium ion battery prepared using the positive electrode material is difficult to simultaneously have appropriate energy density, relatively high capacity retention, relatively high cycle retention, and relatively low gas generation during cycling.

To solve the above-mentioned technical problems, the technical solution adopted in the present disclosure is as follows:

a positive electrode material, including w1 parts of an active material A and w2 parts of an active material B, where the active material A is $Li_{i1}Mn_{x1}Fe_{y1}PO_4M_{f1}$, and the active material B is $Li_{i2}Ni_{x2}Co_{y2}Mn_zO_2H_{f2}$,

where i1 ranges from 0.95 to 1.1, a ratio of x1 to y1 ranges from 0.5 to 4, a sum of x1 and y1 is 1, f1 ranges from 200 ppm to 3000 ppm, and M includes at least one of V, Al, Mo, Zr, Mg, Ti, W, Sr, Cr, La, and Ce; i2 ranges from 0.95 to 1.1, a sum of x2, y2, and z is 1, f2 ranges from 200 ppm to 8000 ppm, and H includes at least one of Al, Zr, Ti, Mg, Sr, W, Y, Nb, Ca, Mo, B, F, Ge, Sn, Ce, and Ta;

an actual specific capacity of the active material A is c1, an actual specific capacity of the active material B is c2, a ratio of c2 to c1 is k, and a ratio of w2 to w1 is n; when k is less than or equal to 1.34, n ranges from 1 to 9; and when k is greater than 1.34, n ranges from 0.1 to 1.

In an embodiment, D50 of the active material A ranges from 0.2 μm to 5 μm and a specific surface area of the active material A is not higher than 25 m²/g, and D50 of the active material B ranges from 2 μm to 13 μm and a specific surface area of the active material B is not higher than 1.5 m²/g.

In an embodiment, a particle size distribution of the active material A satisfies the following relationships: (D90-D50)/(D90-D10) ≤ 0.96; and 0.03 ≤ (D50-D10)/(D90-D50) ≤ 0.24.

In an embodiment, a particle size distribution of the active material B satisfies the following relationships: (D50-D10)/(D90-D10) ≤ 0.40; and 0.35 ≤ (D50-D10)/(D90-D50) ≤ 0.75.

In an embodiment, physical properties of the active material A and the active material B satisfy the following relationship:

$$0.95 \le (T1*T2*S1*S2)/(D1*D2*P1*P2) \le 1.15;$$

where T1 and T2 are tap densities of the active material A and the active material B, respectively; D1 and D2 are D50 values of the active material A and the active material B, respectively; P1 and P2 are powder compaction densities of the active material A and the active material B, respectively; and S1 and S2 are specific surface areas of the active material A and the active material B, respectively.

In an embodiment, three strongest peaks in an X-ray diffraction pattern of the active material A satisfy the following relationships:

$$0.99 \le I_{a1}/I_{a2} \le 1.39, \; 0.74 \le F_{a1}/F_{a2} \le 1.14, \; 1.07 \le I_{a1}/I_{a3} \le 1.47, \text{ and } 0.82 \le F_{a1}/F_{a3} \le 1.22;$$

where $I_{a1}$, $I_{a2}$, and $I_{a3}$ are intensities of a first strongest peak, a second strongest peak, and a third strongest peak of the active material A, respectively, and $F_{a1}$, $F_{a2}$, and $F_{a3}$ are half-widths of the first strongest peak, the second strongest peak, and the third strongest peak of the active material A, respectively;

where three strongest peaks in an X-ray diffraction pattern of the active material B satisfy the following relationships:

$$1.23 \le I_{b1}/I_{b2} \le 1.63, \; 0.6 \le F_{b1}/F_{b2} \le 1.0, \; 3.45 \le I_{b1}/I_{b3} \le 3.85, \text{ and } 0.67 \le F_{b1}/F_{b3} \le 1.07;$$

where $I_{b1}$, $I_{b2}$, and $I_{b3}$ are intensities of a first strongest peak, a second strongest peak, and a third strongest peak of the active material B, respectively, and $F_{b1}$, $F_{b2}$, and $F_{b3}$ are half-widths of the first strongest peak, the second strongest peak, and the third strongest peak of the active material B, respectively.

The present disclosure further provides a positive electrode sheet, including the positive electrode material described above.

The present disclosure further provides a lithium ion battery, including the positive electrode sheet described above.

In an embodiment, a compaction density of the positive electrode sheet ranges from 2.0 g/cm$^3$ to 3.6 g/cm$^3$.

In an embodiment, an electrolyte injection coefficient during a preparation process of the lithium ion battery is h, a ratio of a negative electrode capacity to a positive electrode capacity of the lithium ion battery is q, and a ratio of h to q ranges from 2.43 to 3.48.

Compared with the prior art, the present disclosure uses a mixture of a lithium manganese iron phosphate material (the active material A) and a ternary cathode material (the active material B) as a positive electrode material. By mixing the lithium manganese iron phosphate material and the ternary cathode material having element ratios defined in the present disclosure as a positive electrode active material, an overall content proportion of transition metal ions in a positive electrode sheet obtained is moderate. In addition, in the present disclosure, during mixing of the lithium manganese iron phosphate material and the ternary material, a mass ratio n of the ternary material to the lithium manganese iron phosphate material in the positive electrode material is determined according to a range of a ratio k of an actual specific capacity of the ternary material to an actual specific capacity of the lithium manganese iron phosphate material. Specifically, when k is less than or equal to 1.34, n is 1 to 9; and when k is greater than 1.34, n is 0.1 to 1, so as to avoid the following situations: due to an improper mixing ratio of the two materials, a lithium ion battery prepared using the positive electrode material is prone to problems such as low capacity retention, low cycle retention, and severe gas generation during cycling. As a result, a lithium ion battery prepared from the positive electrode material is likely to simultaneously have relatively high energy density, relatively high capacity retention, relatively high cycle retention, and relatively low gas generation during cycling.

## DETAILED DESCRIPTION OF THE EMBODIMENTS

To make the above-mentioned objectives, features, and advantages of the present disclosure more apparent and easier to understand, specific embodiments of the present disclosure are described in detail below with reference to the accompanying drawings.

It should be noted that, in the absence of conflict, features in the embodiments of the present disclosure may be combined with each other. The terms "contain," "include," "including," and "have" are non-limiting in meaning, that is, other steps and other components that do not affect the results may be added. The above terms cover the terms "consist of" and "consist essentially of." Unless otherwise specified, materials, devices, and reagents are all commercially available. It should also be noted that, in the present disclosure, ppm represents parts per million.

An embodiment of the present disclosure provides a positive electrode material. Based on parts by weight, the positive electrode material includes w1 parts of an active material A, $Li_{i1}Mn_{x1}Fe_{y1}PO_4M_{f1}$, and w2 parts of an active material B, $Li_{i2}Ni_{x2}Co_{y2}Mn_zO_2H_{f2}$,

in which i1 ranges from 0.95 to 1.1, a ratio of x1 to y1 ranges from 0.5 to 4, a sum of x1 and y1 is 1, f1 ranges from 200 ppm to 3000 ppm, and M includes at least one of V, Al, Mo, Zr, Mg, Ti, W, Sr, Cr, La, and Ce; i2 ranges from 0.95 to 1.1, a sum of x2, y2, and z is 1, f2 ranges from 200 ppm to 8000 ppm, and H includes at least one of Al, Zr, Ti, Mg, Sr, W, Y, Nb, Ca, Mo, B, F, Ge, Sn, Ce, and Ta;

an actual specific capacity of the active material A is c1, an actual specific capacity of the active material B is c2, a ratio of c2 to c1 is k, and a ratio of w2 to w1 is n; when k is less than or equal to 1.34, n ranges from 1 to 9; and when k is greater than 1.34, n ranges from 0.1 to 1.

Compared with the prior art, in this embodiment, a lithium manganese iron phosphate material (the active material A) and a ternary cathode material (the active material B) are mixed and used as a positive electrode material. By mixing the lithium manganese iron phosphate material and the ternary cathode material having the element ratios defined in the present disclosure as a positive electrode active material, an overall content proportion of transition metal ions in a positive electrode sheet obtained is moderate. In addition, in this embodiment, during mixing of the lithium manganese iron phosphate material and the ternary material, based on a range of a ratio k of an actual specific capacity of the ternary material to an actual specific capacity of the lithium manganese iron phosphate material, a mass ratio n of the ternary material to the lithium manganese iron phosphate material in the positive electrode material is determined. Specifically, when k is less than or equal to 1.34, n is 1 to 9; and when k is greater than 1.34, n is 0.1 to 1, so as to avoid the following situations: due to an improper mixing ratio of the two materials, a lithium ion battery prepared using the positive electrode material is prone to problems such as low capacity retention, low capacity retention, and severe gas generation during cycling. As a result, a lithium ion battery prepared from the positive electrode material is likely to simultaneously have a relatively high energy density, a relatively high capacity retention, a relatively high cycle retention, and a relatively low amount of gas generation during cycling.

In this embodiment, the actual specific capacity c1 of the active material A, $Li_{i1}Mn_{x1}Fe_{y1}PO_4M_{f1}$, is obtained by a coin cell test method. A 2032-type coin cell is taken as an example below to describe the test method. The specific process is as follows.

Using the active material A as a positive electrode active material, coin cells are prepared. Ten cells are selected for specific capacity testing, and an average value of obtained specific capacity data of the cells is taken to obtain the actual specific capacity c1 of the active material A. Process parameters involved in preparation of the 2032-type coin cells are as follows: a positive electrode formulation of conductive agent SP: binder PVDF: positive electrode active material = 4:4:92, an aluminum foil used as a positive electrode current collector, metallic Li used as a counter electrode, hexafluorophosphate used as an electrolyte, and Celgard2400 used as a separator. An areal coating density of a positive electrode slurry is controlled at $8.75 \pm 0.1$ $mg/cm^2$, and a compaction density of a positive electrode sheet is 1.6 $g/cm^3$.

A specific capacity test method for a single cell is as follows.

At a temperature of $25 \pm 2°C$, a half cell is charged at a constant current of 0.1C to $V_1$, then charged at a constant voltage of $V_1$ until a current reaches 0.05C, and then discharged at a constant current of 0.1C to $V_2$, and the above process is cycled twice. A specific capacity of the cell is calculated based on a discharge capacity value of a second discharge, and a calculation formula is as follows:

$$C = C_{discharge}/[(M_{electrode} - M_{aluminum\ foil}) * 0.92];$$

in which $C_{discharge}$ is a capacity of the half cell after two cycles, $M_{electrode}$ is a mass of a positive electrode sheet, $M_{aluminum\ foil}$ is a mass of an aluminum foil current collector in the positive electrode sheet, $V_1$ is 4.5 V, and $V_2$ is 2 V.

In this embodiment, the actual specific capacity c2 of the active material B, $Li_{i2}Ni_{x2}Co_{y2}Mn_zO_2H_{f2}$, is obtained by a coin cell test method. A 2032-type coin cell is taken as an example below to describe the test method. The specific process is as follows.

Using the active material B as a positive electrode active material, coin cells are prepared. Ten cells are selected for specific capacity testing, and an average value of obtained specific capacity data of the cells is taken to obtain the actual specific capacity c2 of the active material B. Process parameters involved in preparation of the 2032-type coin cells are as follows: a positive electrode formulation of conductive agent SP: binder PVDF: positive electrode active material = 4:4:92, an aluminum foil used as a positive electrode current collector, metallic Li used as a counter electrode, hexafluorophosphate used as an electrolyte, and Celgard2400 used as a separator. An areal coating density of a positive electrode slurry is controlled at $8.75 \pm 0.1$ $mg/cm^2$, and a compaction density of a positive electrode sheet is 2.6 $g/cm^3$.

A specific capacity test method for a single cell is as follows.

At a temperature of $25 \pm 2°C$, a half cell is charged at a constant current of 0.1C to $V_1$, then charged at a constant voltage of $V_1$ until a current reaches 0.05C, and then discharged at a constant current of 0.1C to $V_2$, and the above process is cycled twice. A specific capacity of the cell is calculated based on a discharge capacity value of a second discharge, and a calculation formula is as follows:

$$C = C_{discharge}/[(M_{electrode} - M_{aluminum\ foil}) * 0.92];$$

in which $C_{discharge}$ is a capacity of the half cell after two cycles, $M_{electrode}$ is a mass of a positive electrode sheet, and $M_{aluminum\ foil}$ is a mass of an aluminum foil current collector in the positive electrode sheet. When x2 is less than 0.8, $V_1$ is 4.4 V and $V_2$ is 3.0 V; when x2 is greater than or equal to 0.8, $V_1$ is 4.3 V and $V_2$ is 3.0 V.

In some embodiments of the present disclosure, D50 of the active material A ranges from 0.2 $\mu$m to 5 $\mu$m, and a specific surface area of the active material A is not higher than 25 $m^2$/g. A particle size distribution of the active material A satisfies the following relationships:

$$(D90-D50)/(D90-D10) \leq 0.96;\ and\ 0.03 \leq (D50-D10)/(D90-D50) \leq 0.24.$$

The active material A has relatively poor conductivity. A large amount of large particles in the active material A causes an increase in a lithium ion transport path and an increase in impedance, thereby affecting capacity performance of the active material A. In the present disclosure, by controlling particle size and particle size distribution of the active material A in the positive electrode material, excessive large particles of the active material A in the positive electrode material are avoided, so that an advantage of high energy density of the active material A is fully utilized, and a lithium ion battery prepared using the positive electrode material is ensured to have a relatively appropriate energy density.

In some embodiments of the present disclosure, D50 of the active material B ranges from 2 $\mu$m to 13 $\mu$m, and a specific surface area of the active material B is not higher than 1.5 $m^2$/g. A particle size distribution of the active material B satisfies the following relationships:

$$(D50-D10)/(D90-D10) \leq 0.40;\ and\ 0.35 \leq (D50-D10)/(D90-D50) \leq 0.75.$$

When an amount of small particles of the active material B increases, side reactions increase, resulting in an increase in gas generation during cycling of a lithium ion battery. In the present disclosure, by controlling particle size and particle size distribution of the active material B in the positive electrode material, excessive small particles of the active material B in the positive electrode material are avoided.

In some embodiments of the present disclosure, physical property parameters of the active material A and the active material B satisfy the following relationship:

$$0.95 \leq (T1*T2*S1*S2)/(D1*D2*P1*P2) \leq 1.15,$$

in which T1 and T2 are tap densities of the active material A and the active material B, respectively; D1 and D2 are D50 values of the active material A and the active material B, respectively; P1 and P2 are powder compaction densities of the active material A and the active material B, respectively; and S1 and S2 are specific surface areas of the active material A and the active material B, respectively.

In some embodiments of the present disclosure, three strongest peaks in an X-ray diffraction pattern of the active material A satisfy the following relationships:

$$0.99 \leq I_{a1}/I_{a2} \leq 1.39,\ 0.74 \leq F_{a1}/F_{a2} \leq 1.14,\ 1.07 \leq I_{a1}/I_{a3} \leq 1.47,\ and\ 0.82 \leq F_{a1}/F_{a3} \leq 1.22;$$

in which $I_{a1}$, $I_{a2}$, and $I_{a3}$ are intensities of a first strongest peak, a second strongest peak, and a third strongest peak of the active material A, respectively, and $F_{a1}$, $F_{a2}$, and $F_{a3}$ are half-widths of the first strongest peak, the second strongest peak, and the third strongest peak of the active material A, respectively;

three strongest peaks in an X-ray diffraction pattern of the active material B satisfy the following relationships:

$$1.23 \leq I_{b1}/I_{b2} \leq 1.63, \ 0.6 \leq F_{b1}/F_{b2} \leq 1.0, \ 3.45 \leq I_{b1}/I_{b3} \leq 3.85, \text{ and } 0.67 \leq F_{b1}/F_{b3} \leq 1.07;$$

in which $I_{b1}$, $I_{b2}$, and $I_{b3}$ are intensities of a first strongest peak, a second strongest peak, and a third strongest peak of the active material B, respectively, and $F_{b1}$, $F_{b2}$, and $F_{b3}$ are half-widths of the first strongest peak, the second strongest peak, and the third strongest peak of the active material B, respectively.

Intensities and half-widths of three strongest peaks of a material reflect crystal crystallinity of the material, and crystal crystallinity of the material affects performance of the material.

The present disclosure further provides a positive electrode sheet, including the positive electrode material described above.

The present disclosure further provides a lithium ion battery, including the positive electrode sheet described above. A compaction density of the positive electrode sheet is 2.0 g/cm³ to 3.6 g/cm³. During a preparation process of the lithium ion battery, an electrolyte injection coefficient is h, a ratio of a negative electrode capacity to a positive electrode capacity of the lithium ion battery is q, and a ratio of h to q is 2.43 to 3.48.

The present disclosure will be further illustrated below with reference to specific embodiments. It should be understood that these embodiments are for illustrative purposes only and are not intended to limit the scope of the present disclosure.

First embodiment

Based on parts by weight, in this embodiment, the positive electrode material includes w1 parts of an active material A, $LiMn_{0.6}Fe_{0.4}PO_4M_{f1}$, and w2 parts of an active material B, $LiNi_{0.9}Co_{0.05}Mn_{0.05}O_2H_{f2}$. In this embodiment, f1 is 500 ppm and M is Ti; f2 is 2000 ppm and H is Zr.

After testing, an actual specific capacity c1 of the active material A is 152 mAh/g, and an actual specific capacity c2 of the active material B is 220 mAh/g. A ratio of c2 to c1 is k, and a ratio of w2 to w1 is n.

In this embodiment, k is 1.45 and n is 0.25. For the active material A, D90 is 4.72 $\mu$m, D50 is 0.556 $\mu$m, and D10 is 0.302 $\mu$m, (D90-D50)/(D90-D10) is 0.94, and (D50-D10)/(D90-D50) is 0.06. A particle size distribution satisfies the following relationships:

$$(D90 - D50)/(D90 - D10) \leq 0.96, \text{ and } 0.03 \leq (D50 - D10)/(D90 - D50) \leq 0.24;$$

for the active material B, D90 is 6.939 $\mu$m, D50 is 3.917 $\mu$m, and D10 is 2.158 $\mu$m, (D50-D10)/(D90-D10) is 0.36, and (D50-D10)/(D90-D50) is 0.56. A particle size distribution satisfies the following relationships:

$$(D50 - D10)/(D90 - D10) \leq 0.40, \text{ and } 0.35 \leq (D50 - D10)/(D90 - D50) \leq 0.75.$$

In this embodiment, physical property parameters of the active material A and the active material B satisfy the following relationship:

$$0.95 \leq (T1*T2*S1*S2)/(D1*D2*P1*P2) \leq 1.15;$$

in which T1 and T2 are tap densities of the active material A and the active material B, respectively, D1 and D2 are D50 values of the active material A and the active material B, respectively, P1 and P2 are powder compaction densities of the active material A and the active material B, respectively, and S1 and S2 are specific surface areas of the active material A and the active material B, respectively. Specifically, in this embodiment, T1 and T2 are 0.593 g/cm³ and 1.93 g/cm³, respectively, D1 and D2 are 0.556 $\mu$m and 3.917 $\mu$m, respectively, P1 and P2 are 2.205 g/cm³ and 3.127 g/cm³, respectively, and S1 and S2 are 19.43 m²/g and 0.716 m²/g, respectively.

Relationships among intensities of three strongest peaks in an X-ray diffraction pattern of the active material A are as follows: ① $I_{a1}/I_{a2}$ = 1.19 and $F_{a1}/F_{a2}$ = 0.94, and ② $I_{a1}/I_{a3}$ = 1.27 and $F_{a1}/F_{a3}$ = 1.02.

The three strongest peaks satisfy the following relationships:

$$0.99 \leq I_{a1}/I_{a2} \leq 1.39, \ 0.74 \leq F_{a1}/F_{a2} \leq 1.14, \ 1.07 \leq I_{a1}/I_{a3} \leq 1.47, \ \text{and} \ 0.82 \leq F_{a1}/F_{a3} \leq 1.22;$$

in which $I_{a1}$, $I_{a2}$, and $I_{a3}$ are intensities of a first strongest peak, a second strongest peak, and a third strongest peak of the active material A, respectively, and $F_{a1}$, $F_{a2}$, and $F_{a3}$ are half-widths of the first strongest peak, the second strongest peak, and the third strongest peak of the active material A, respectively.

Relationships among intensities of three strongest peaks in an X-ray diffraction pattern of the active material B are as follows: $I_{b1}/I_{b2}$ = 1.43 and $F_{b1}/F_{b2}$ = 0.8, and $I_{b1}/I_{b3}$ = 3.65 and $F_{b1}/F_{b3}$ = 0.87.

The three strongest peaks satisfy the following relationships:

$$1.23 \leq I_{b1}/I_{b2} \leq 1.63, \ 0.6 \leq F_{b1}/F_{b2} \leq 1.0, \ 3.45 \leq I_{b1}/I_{b3} \leq 3.85, \ 0.67 \leq F_{b1}/F_{b3} \leq 1.07;$$

in which $I_{b1}$, $I_{b2}$, and $I_{b3}$ are intensities of a first strongest peak, a second strongest peak, and a third strongest peak of the active material B, respectively, and $F_{b1}$, $F_{b2}$, and $F_{b3}$ are half-widths of the first strongest peak, the second strongest peak, and the third strongest peak of the active material B, respectively.

A lithium ion battery is prepared using the positive electrode material in this embodiment. During preparation of the lithium ion battery, a double-sided coating areal density of a positive electrode is 372 $g/m^2$, a compaction density of a positive electrode sheet after roll pressing is 2.5 $g/cm^3$, an electrolyte injection coefficient h is 3.6, a ratio q of a negative electrode capacity to a positive electrode capacity of the lithium ion battery is 1.08, and a ratio of h to q is 3.3.

Second embodiment

Based on parts by weight, in this embodiment, the positive electrode material includes w1 parts of an active material A, $LiMn_{0.6}Fe_{0.4}PO_4M_{f1}$, and w2 parts of an active material B, $LiNi_{0.6}Co_{0.1}Mn_{0.3}O_2H_{f2}$. In this embodiment, f1 is 500 ppm and M is Ti; f2 is 2000 ppm and H is Zr.

After testing, an actual specific capacity c1 of the active material A is 152 mAh/g, and an actual specific capacity c2 of the active material B is 197 mAh/g. A ratio of c2 to c1 is k, and a ratio of w2 to w1 is n.

In this embodiment, k is 1.30 and n is 4. For the active material A, D90 is 4.72 $\mu$m, D50 is 0.556 $\mu$m, and D10 is 0.302 $\mu$m, (D90-D50)/(D90-D10) is 0.94, and (D50-D10)/(D90-D50) is 0.06. A particle size distribution satisfies the following relationships:

$$(D90-D50)/(D90-D10) \leq 0.96; \text{ and } 0.03 \leq (D50-D10)/(D90-D50) \leq 0.24;$$

for the active material B, D90 is 6.920 $\mu$m, D50 is 3.920 $\mu$m, and D10 is 2.155 $\mu$m, (D50-D10)/(D90-D10) is 0.37, and (D50-D10)/(D90-D50) is 0.59. A particle size distribution satisfies the following relationships:

$$(D50-D10)/(D90-D10) \leq 0.40; \text{ and } 0.35 \leq (D50-D10)/(D90-D50) \leq 0.75.$$

In this embodiment, physical property parameters of the active material A and the active material B satisfy the following relationship:

$$0.95 \leq (T1*T2*S1*S2)/(D1*D2*P1*P2) \leq 1.15;$$

in which T1 and T2 are tap densities of the active material A and the active material B, respectively, D1 and D2 are D50 values of the active material A and the active material B, respectively, P1 and P2 are powder compaction densities of the active material A and the active material B, respectively, and S1 and S2 are specific surface areas of the active material A and the active material B, respectively. Specifically, in this embodiment, T1 and T2 are 0.593 $g/cm^3$ and 1.928 $g/cm^3$, respectively, D1 and D2 are 0.556 $\mu$m and 3.920 $\mu$m, respectively, P1 and P2 are 2.205 $g/cm^3$ and 3.124 $g/cm^3$, respectively, and S1 and S2 are 19.43 $m^2/g$ and 0.713 $m^2/g$, respectively.

Relationships among intensities of three strongest peaks in an X-ray diffraction pattern of the active material A are as follows: ① $I_{a1}/I_{a2}$ = 1.19 and $F_{a1}/F_{a2}$ = 0.94, and ② $I_{a1}/I_{a3}$ = 1.27 and $F_{a1}/F_{a3}$ = 1.02.

The relationships satisfy the following conditions:

$$0.99 \leq I_{a1}/I_{a2} \leq 1.39, \ 0.74 \leq F_{a1}/F_{a2} \leq 1.14, \ 1.07 \leq I_{a1}/I_{a3} \leq 1.47, \text{ and } 0.82 \leq F_{a1}/F_{a3} \leq 1.22;$$

in which $I_{a1}$, $I_{a2}$, and $I_{a3}$ are intensities of a first strongest peak, a second strongest peak, and a third strongest peak of the active material A, respectively, and $F_{a1}$, $F_{a2}$, and $F_{a3}$ are half-widths of the first strongest peak, the second strongest peak, and the third strongest peak of the active material A, respectively.

Relationships among intensities of three strongest peaks in an X-ray diffraction pattern of the active material B are as follows: $I_{b1}/I_{b2}$ = 1.45 and $F_{b1}/F_{b2}$ = 0.81, and $I_{b1}/I_{b3}$ = 3.61 and $F_{b1}/F_{b3}$ = 0.91.

The three strongest peaks satisfy the following relationships:

$$1.23 \leq I_{b1}/I_{b2} \leq 1.63, \ 0.6 \leq F_{b1}/F_{b2} \leq 1.0, \ 3.45 \leq I_{b1}/I_{b3} \leq 3.85, \text{ and } 0.67 \leq F_{b1}/F_{b3} \leq 1.07;$$

in which $I_{b1}$, $I_{b2}$, and $I_{b3}$ are intensities of a first strongest peak, a second strongest peak, and a third strongest peak of the active material B, respectively, and $F_{b1}$, $F_{b2}$, and $F_{b3}$ are half-widths of the first strongest peak, the second strongest peak, and the third strongest peak of the active material B, respectively.

A lithium ion battery is prepared using the positive electrode material in this embodiment. During preparation of the lithium ion battery, a double-sided coating areal density of a positive electrode is 372 g/m$^2$, a compaction density of a positive electrode sheet after roll pressing is 2.5 g/cm$^3$, an electrolyte injection coefficient h is 3.6, a ratio q of a negative electrode capacity to a positive electrode capacity of the lithium ion battery is 1.08, and a ratio of h to q is 3.3.

Third embodiment

The difference from the first embodiment lies in that n is 1, and the rest are the same as those in the first embodiment.

Fourth embodiment

The difference from the first embodiment lies in that n is 0.1, and the rest are the same as those in the first embodiment.

Fifth embodiment

The difference from the second embodiment lies in that n is 1, and the rest are the same as those in the second embodiment.

Sixth embodiment

The difference from the second embodiment lies in that n is 9, and the rest are the same as those in the second embodiment.

First comparative example

The difference from the first embodiment lies in that n is 1.3, and the rest are the same as those in the first embodiment.

Second comparative example

The difference from the second embodiment lies in that n is 0.25, and the rest are the same as those in the second embodiment.

Third comparative example

The positive electrode material is the active material A in the first embodiment, and a preparation method of the lithium ion battery is the same as that in the first embodiment.

Fourth comparative example

The positive electrode material is the active material B in the first embodiment, and a preparation method of the lithium ion battery is the same as that in the first embodiment.

Fifth comparative example

The difference from the first embodiment lies in that, for the active material A, D90 is 1.52 $\mu$m, D50 is 0.9 $\mu$m, and D10 is 0.4 $\mu$m, (D90-D50)/(D90-D10) is 1.2, and (D50-D10)/(D90-D50) is 0.81. The particle size distribution does not satisfy the following relationships:

$$(D90-D50)/(D90-D10) \leq 0.96; \text{ and } 0.03 \leq (D50-D10)/(D90-D50) \leq 0.24;$$

the rest are the same as those in the first embodiment.

Sixth comparative example

The difference from the first embodiment lies in that, for the active material B, D90 is 6.5 $\mu$m, D50 is 3.6 $\mu$m, and D10 is 0.9 $\mu$m, (D50-D10)/(D90-D10) is 0.48, and (D50-D10)/(D90-D50) is 0.93. The particle size distribution does not satisfy the following relationships:

$$(D50-D10)/(D90-D10) \leq 0.40; \text{ and } 0.35 \leq (D50-D10)/(D90-D50) \leq 0.75.$$

The rest are the same as those in the first embodiment.

Seventh comparative example

The difference from the first embodiment lies in that relationships among intensities of three strongest peaks in an X-ray diffraction pattern of the active material A are as follows: ① $I_{a1}/I_{a2} = 0.9$ and $F_{a1}/F_{a2} = 0.68$, and ② $I_{a1}/I_{a3} = 0.98$ and $F_{a1}/F_{a3} = 0.76$.
The three strongest peaks do not satisfy the following relationships:

$$0.99 \leq I_{a1}/I_{a2} \leq 1.39, \ 0.74 \leq F_{a1}/F_{a2} \leq 1.14, \ 1.07 \leq I_{a1}/I_{a3} \leq 1.47, \text{ and } 0.82 \leq F_{a1}/F_{a3} \leq 1.22;$$

the rest are the same as those in the first embodiment.

Eighth comparative example

The difference from the first embodiment lies in that physical property parameters of the active material A and the active material B do not satisfy the following relationship:

$$0.95 \leq (T1*T2*S1*S2)/(D1*D2*P1*P2) \leq 1.15;$$

in which T1 and T2 are tap densities of the active material A and the active material B, respectively, D1 and D2 are D50 values of the active material A and the active material B, respectively, P1 and P2 are powder compaction densities of the active material A and the active material B, respectively, and S1 and S2 are specific surface areas of the active material A and the active material B, respectively. Specifically, in this comparative example, parameters related to the active material A are changed: T1 and T2 are 0.45 g/cm$^3$ and 1.93 g/cm$^3$, respectively, D1 and D2 are 0.55 $\mu$m and 3.917 $\mu$m, respectively, P1 and P2 are 2.20 g/cm$^3$ and 3.127 g/cm$^3$, respectively, and S1 and S2 are 22 m$^2$/g and 0.716 m$^2$/g, respectively.
The rest are the same as those in the first embodiment.

Ninth comparative example

The difference from the first embodiment lies in that an electrolyte injection coefficient h is 2.3, a ratio q of a negative electrode capacity to a positive electrode capacity of the lithium ion battery is 1.08, and a ratio of h to q is 2.13. The rest are the same as those in the first embodiment.

Experimental example

Batteries prepared in the first embodiment to sixth embodiment and the first comparative example to ninth comparative example are respectively tested for ultimate compaction density, full-cell specific capacity utilization, rate performance, capacity retention, cycle retention, and gas generation during cycling, and results are shown in Table 1.

It can be seen from Table 1 that lithium ion batteries prepared using positive electrode materials in the first embodiment to sixth embodiment simultaneously have relatively high full-cell specific capacity utilization, relatively high capacity retention, relatively good cycling performance, and relatively good safety performance. It can be seen that, under an appropriate mixing ratio, the active material A provides a favorable coating effect on the active material B, reduces side reactions of the active material B, and stabilizes an interface, and under the appropriate mixing ratio, the active material B improves energy density of the active material A, enhances rate performance, reduces dissolution of Mn elements, and improves storage performance and cycling performance.

Compared with the first embodiment, the third embodiment, and the fourth embodiment, in the first comparative example, due to an excessive proportion of the ternary material, capacity retention, cycle retention, and gas generation during cycling of the lithium ion battery are severely deteriorated. Compared with the second embodiment, the fourth embodiment, and the fifth embodiment, in the second comparative example, due to an insufficient proportion of the ternary material, capacity retention, cycle retention, and gas generation during cycling of the lithium ion battery are also severely deteriorated. Compared with the fourth embodiment, in the third comparative example, under a boundary mixing ratio, a small amount of the ternary material (the active material B) is mixed into the lithium manganese iron phosphate material (the active material A). Since the ternary material has a faster ion diffusion rate, rate performance is improved, and improvements in storage performance and cycling performance are more significant. Compared with the sixth embodiment, in fourth comparative example, under a boundary mixing ratio, a small amount of the lithium manganese iron phosphate material (the active material A) is mixed into the ternary material (the active material B). Since the lithium manganese iron phosphate material improves an interface of the ternary material and reduces side reactions, cycling performance can be effectively improved. From the above analysis, it can be seen that, when the lithium manganese iron phosphate material (the active material A) and the ternary material (the active material B) are mixed, it is necessary to determine a mass ratio n of the ternary material to the lithium manganese iron phosphate material in the positive electrode material according to a range of a ratio k of an actual specific capacity of the ternary material to an actual specific capacity of the lithium manganese iron phosphate material. Specifically, when k is less than or equal to 1.34, n is 1 to 9; and when k is greater than 1.34, n is 0.1 to 1, so as to avoid the following situations: due to an improper mixing ratio of the two materials, a lithium ion battery prepared using the positive electrode material is prone to problems such as low capacity retention, low cycle retention, and severe gas generation during cycling.

It can be seen from Table 1 that, compared with the first embodiment, in the fifth comparative example, full-cell specific capacity utilization of the lithium ion battery is reduced and rate performance is deteriorated. This is because a particle size distribution of the active material A is changed, with more large particles and poorer conductivity, resulting in reduced full-cell specific capacity utilization and deteriorated rate performance.

Compared with the first embodiment, in the sixth comparative example, capacity retention and cycle retention of the lithium ion battery are reduced, and gas generation during cycling is increased. This is because a particle size distribution of the active material B is changed, with more small particles and more severe side reactions, resulting in reduced capacity retention, reduced cycle retention, and increased gas generation during cycling.

Compared with the first embodiment, in the seventh comparative example, compaction density of an electrode sheet of the lithium ion battery is reduced, capacity retention is reduced, cycle retention is reduced, and gas generation during cycling is increased. This is because crystal structure development of the active material A is relatively poor.

Compared with the first embodiment, in the eighth comparative example, compaction density of an electrode sheet of the lithium ion battery is significantly reduced.

Compared with the first embodiment, in the ninth comparative example, capacity retention and cycle retention of the lithium ion battery are reduced.

In summary, when the lithium manganese iron phosphate material (the active material A) and the ternary material (the active material B) are mixed, it is necessary to determine a mass ratio n of the ternary material to the lithium manganese iron phosphate material in the positive electrode material according to a range of a ratio k of an actual specific capacity of the ternary material to an actual specific capacity of the lithium manganese iron phosphate material. Specifically, when k is less than or equal to 1.34, n is 1 to 9; and when k is greater than 1.34, n is 0.1 to 1, so as to avoid the following situations: due to an improper mixing ratio of the two materials, a lithium ion battery prepared using the positive electrode material is prone to problems such as low capacity retention, low cycle retention, and severe gas generation during cycling. To enable the lithium ion battery to simultaneously have relatively high energy density, relatively high capacity retention, relatively good cycling performance, and relatively good safety performance, in addition to controlling an appropriate mixing ratio, it is also necessary to strictly control particle size distribution, crystal structure, tap density, powder compaction density, specific surface area, and the like of the two mixed materials.

Table 1

| | Ultimate compaction density | Full-cell specific capacity utilization (mAh/g @ 0.33C) | Rate performance (3C/0.33C) | Capacity retention/capacity recovery at 60°C (30 d) | Room-temperature cycle retention (500 cycles) | Gas generation during cycling (ml/Ah @ 500 cycles) |
|---|---|---|---|---|---|---|
| First embodiment | 2.60 | 149 | 92.5% | 94.5%/95.5% | 93.5% | 0.5 |
| Second embodiment | 3.3 | 182 | 92% | 94.9%/95.6% | 93.6% | 0.4 |
| Third embodiment | 2.9 | 173 | 92.5% | 93%/94% | 92% | 0.7 |
| Fourth embodiment | 2.46 | 145 | 91.9% | 90.5%/91.4% | 91.5% | 0.55 |
| Fifth embodiment | 2.9 | 165.5 | 92.6% | 95%/95.7% | 93.9% | 0.6 |
| Sixth embodiment | 3.34 | 187.5 | 93.1% | 90.1 %/91.5% | 93.8. | 0.4 |
| First comparative example | 3.40 | 178 | 93% | 92.3/93.1% | 90.1% | 1.0 |
| Second comparative example | 2.57 | 149 | 92.5% | 91.5%/92% | 91% | 0.8 |
| Third comparative example | 2.35 | 138 | 91.7% | 89.7%/91.2% | 88.1% | 1.1 |
| Fourth comparative example | 3.45 | 193 | 94.1% | 90.6%/91.0% | 89.5% | 0.9 |
| Fifth comparative example | 2.62 | 147 | 91.5% | 94.2%/95.6% | 92.2% | 0.5 |
| Sixth comparative example | 2.58 | 150 | 92.8% | 93.8%/95.2% | 91.9% | 0.8 |
| Seventh comparative example | 2.51 | 149.1 | 92.5% | 91.2%/91.9% | 91.6% | 0.8 |
| Eighth comparative example | 2.29 | 149.2 | 93% | 94.3%/95.2% | 93.1% | 0.6 |

(continued)

|  | Ultimate compaction density | Full-cell specific capacity utilizatio n (mAh/g @ 0.33C) | Rate performanc e (3C/0.33C) | Capacity retention/capacit y recovery at 60°C (30 d) | Room-temperatur e cycle retention (500 cycles) | Gas generatio n during cycling (ml/Ah @ 500 cycles) |
|---|---|---|---|---|---|---|
| Ninth com-parativ e example | 2.6 | 149 | 91.1% | 90.1%/90.8% | 85.2% | 0.51 |

Some lithium ion battery performance test methods involved in the present disclosure are as follows:

Rate performance: charging is performed in accordance with single-cell requirements in GB/T 31486-2015 "Cycle life requirements and test methods for traction batteries for electric vehicles." After constant-capacity cycling for two cycles at 0.33C, a constant-capacity value of a second cycle is used as a 0.33C discharge calibration capacity, and then charging at 0.33C and discharging at 3C are performed for two cycles. A capacity of a second cycle is used as a 3C discharge calibration capacity, and a ratio of the 3C calibration capacity to the 0.33C calibration capacity is used to quantify rate performance.

Cycling test: cycling tests are performed in accordance with cycle life test requirements of GB/T 31484-2015 "Cycle life requirements and test methods for traction batteries for electric vehicles." A capacity retention after 500 cycles and a gas generation amount after 500 cycles are obtained.

High-temperature storage performance test: fully charged batteries are stored in a constant-temperature chamber at 60°C for 60 d, and capacity retention and capacity recovery are measured.

Ultimate compaction density test: positive electrode sheets are roll-pressed, and a compaction density of the positive electrode sheets at a critical state before brittle failure is measured.

Full-cell specific capacity utilization test: charging is performed in accordance with single-cell requirements in GB/T 31486-2015 "Cycle life requirements and test methods for traction batteries for electric vehicles." After constant-capacity cycling for two cycles at 0.33C, a constant-capacity value of a second cycle is used as full-cell specific capacity utilization.

In addition, it should be noted that although the present disclosure is disclosed as described above, the scope of protection of the present disclosure is not limited thereto. Those skilled in the art may make various changes and modifications without departing from the spirit and scope of the present disclosure, and such changes and modifications shall all fall within the scope of protection of the present disclosure.

**Claims**

1. A positive electrode material, **characterized by** comprising w1 parts of an active material A and w2 parts of an active material B, wherein the active material A is $Li_{i1}Mn_{x1}Fe_{y1}PO_4M_{f1}$, and the active material B is $Li_{i2}Ni_{x2}Co_{y2}Mn_zO_2H_{f2}$,

   wherein i1 ranges from 0.95 to 1.1, a ratio of x1 to y1 ranges from 0.5 to 4, a sum of x1 and y1 is 1, f1 ranges from 200 ppm to 3000 ppm, and M comprises at least one of V, Al, Mo, Zr, Mg, Ti, W, Sr, Cr, La, and Ce; i2 ranges from 0.95 to 1.1, a sum of x2, y2, and z is 1, f2 ranges from 200 ppm to 8000 ppm, and H comprises at least one of Al, Zr, Ti, Mg, Sr, W, Y, Nb, Ca, Mo, B, F, Ge, Sn, Ce, and Ta; and
   an actual specific capacity of the active material A is c1, an actual specific capacity of the active material B is c2, a ratio of c2 to c1 is k, and a ratio of w2 to w1 is n; when k is less than or equal to 1.34, n ranges from 1 to 9; and when k is greater than 1.34, n ranges from 0.1 to 1.

2. The positive electrode material according to claim 1, wherein D50 of the active material A ranges from 0.2 $\mu$m to 5 $\mu$m and a specific surface area of the active material A is not higher than 25 $m^2$/g, and D50 of the active material B ranges from 2 $\mu$m to 13 $\mu$m and a specific surface area of the active material B is not higher than 1.5 $m^2$/g.

3. The positive electrode material according to claim 2, wherein a particle size distribution of the active material A satisfies the following relationships:

$$(D90-D50)/(D90-D10) \leq 0.96; \text{ and } 0.03 \leq (D50-D10)/(D90-D50) \leq 0.24.$$

4. The positive electrode material according to claim 2, wherein a particle size distribution of the active material B satisfies the following relationships:

$$(D50-D10)/(D90-D10) \leq 0.40; \text{ and } 0.35 \leq (D50-D10)/(D90-D50) \leq 0.75.$$

5. The positive electrode material according to claim 1, wherein physical properties of the active material A and the active material B satisfy the following relationship:

$$0.95 \leq (T1*T2*S1*S2)/(D1*D2*P1*P2) \leq 1.15;$$

wherein T1 and T2 are tap densities of the active material A and the active material B, respectively; D1 and D2 are D50 values of the active material A and the active material B, respectively; P1 and P2 are powder compaction densities of the active material A and the active material B, respectively; and S1 and S2 are specific surface areas of the active material A and the active material B, respectively.

6. The positive electrode material according to claim 1, wherein three strongest peaks in an X-ray diffraction pattern of the active material A satisfy the following relationships:

$$0.99 \leq I_{a1}/I_{a2} \leq 1.39, \ 0.74 \leq F_{a1}/F_{a2} \leq 1.14, \ 1.07 \leq I_{a1}/I_{a3} \leq 1.47, \text{ and } 0.82 \leq F_{a1}/F_{a3} \leq 1.22;$$

wherein $I_{a1}$, $I_{a2}$, and $I_{a3}$ are intensities of a first strongest peak, a second strongest peak, and a third strongest peak of the active material A, respectively, and $F_{a1}$, $F_{a2}$, and $F_{a3}$ are half-widths of the first strongest peak, the second strongest peak, and the third strongest peak of the active material A, respectively;
wherein three strongest peaks in an X-ray diffraction pattern of the active material B satisfy the following relationships:

$$1.23 \leq I_{b1}/I_{b2} \leq 1.63, \ 0.6 \leq F_{b1}/F_{b2} \leq 1.0, \ 3.45 \leq I_{b1}/I_{b3} \leq 3.85, \text{ and } 0.67 \leq F_{b1}/F_{b3} \leq 1.07;$$

wherein $I_{b1}$, $I_{b2}$, and $I_{b3}$ are intensities of a first strongest peak, a second strongest peak, and a third strongest peak of the active material B, respectively, and $F_{b1}$, $F_{b2}$, and $F_{b3}$ are half-widths of the first strongest peak, the second strongest peak, and the third strongest peak of the active material B, respectively.

7. A positive electrode sheet, **characterized by** comprising the positive electrode material according to any one of claims 1 to 6.

8. A lithium ion battery, **characterized by** comprising the positive electrode sheet according to claim 7.

9. The lithium ion battery according to claim 8, wherein a compaction density of the positive electrode sheet ranges from 2.0 g/cm$^3$ to 3.6 g/cm$^3$.

10. The lithium ion battery according to claim 9, wherein an electrolyte injection coefficient during a preparation process of the lithium ion battery is h, a ratio of a negative electrode capacity to a positive electrode capacity of the lithium ion battery is q, and a ratio of h to q ranges from 2.43 to 3.48.

## INTERNATIONAL SEARCH REPORT

| International application No. |
|---|
| **PCT/CN2024/130050** |

**A.    CLASSIFICATION OF SUBJECT MATTER**

H01M4/36(2006.01)i;  H01M4/58(2010.01)i;  H01M4/525(2010.01)i;  H01M4/505(2010.01)i;  H01M4/136(2010.01)i;  H01M4/131(2010.01)i;  H01M10/0525(2010.01)i

According to International Patent Classification (IPC) or to both national classification and IPC

**B.    FIELDS SEARCHED**

Minimum documentation searched (classification system followed by classification symbols)

IPC: H01M4/-, H01M10/-

Documentation searched other than minimum documentation to the extent that such documents are included in the fields searched

Electronic data base consulted during the international search (name of data base and, where practicable, search terms used)

CNTXT, DWPI, CNKI, STN, ISI_Web of Science: Li???Mn???Fe?????PO4+, Li???Ni???Co???Mn?????O2+, 三元, 磷酸锰铁锂, 正极, anode, Lithium iron manganese phosphate

**C.    DOCUMENTS CONSIDERED TO BE RELEVANT**

| Category* | Citation of document, with indication, where appropriate, of the relevant passages | Relevant to claim No. |
|---|---|---|
| PX | CN 117691081 A (ZHEJIANG ZEEKR INTELLIGENT TECHNOLOGY CO., LTD. et al.) 12 March 2024 (2024-03-12) <br> claims 1-10 | 1-10 |
| A | CN 116722138 A (REPT BATTERO ENERGY CO., LTD. et al.) 08 September 2023 (2023-09-08) <br> description, embodiment 14 | 1-10 |
| A | JP 2022143506 A (TAIHEIYO CEMENT CORP.) 03 October 2022 (2022-10-03) <br> claim 3 | 1-10 |
| A | CN 110462896 A (TAIHEIYO CEMENT CORP. et al.) 15 November 2019 (2019-11-15) <br> description, the embodiments | 1-10 |
| A | CN 114180648 A (QIAN GUANNAN) 15 March 2022 (2022-03-15) <br> description, the embodiments | 1-10 |
| A | CN 115832221 A (CONTEMPORARY AMPEREX TECHNOLOGY CO., LTD.) 21 March 2023 (2023-03-21) <br> description, the embodiments | 1-10 |

☑ Further documents are listed in the continuation of Box C.        ☑ See patent family annex.

| | |
|---|---|
| *     Special categories of cited documents: <br> "A"   document defining the general state of the art which is not considered to be of particular relevance <br> "D"   document cited by the applicant in the international application <br> "E"   earlier application or patent but published on or after the international filing date <br> "L"   document which may throw doubts on priority claim(s) or which is cited to establish the publication date of another citation or other special reason (as specified) <br> "O"   document referring to an oral disclosure, use, exhibition or other means <br> "P"   document published prior to the international filing date but later than the priority date claimed | "T"   later document published after the international filing date or priority date and not in conflict with the application but cited to understand the principle or theory underlying the invention <br> "X"   document of particular relevance; the claimed invention cannot be considered novel or cannot be considered to involve an inventive step when the document is taken alone <br> "Y"   document of particular relevance; the claimed invention cannot be considered to involve an inventive step when the document is combined with one or more other such documents, such combination being obvious to a person skilled in the art <br> "&"   document member of the same patent family |

| Date of the actual completion of the international search | Date of mailing of the international search report |
|---|---|
| **13 January 2025** | **17 January 2025** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/130050** |

| C. | DOCUMENTS CONSIDERED TO BE RELEVANT | |
| --- | --- | --- |
| Category* | Citation of document, with indication, where appropriate, of the relevant passages | Relevant to claim No. |
| A | CN 115939318 A (ZHUHAI GUANYU POWER BATTERY CO., LTD.) 07 April 2023 (2023-04-07) description, the embodiments | 1-10 |
| A | CN 116864677 A (ANHUI DEYI ENERGY TECHNOLOGY CO., LTD.) 10 October 2023 (2023-10-10) description, the embodiments | 1-10 |

Form PCT/ISA/210 (second sheet) (July 2022)

**INTERNATIONAL SEARCH REPORT**
Information on patent family members

International application No.

**PCT/CN2024/130050**

| Patent document cited in search report | | | Publication date (day/month/year) | Patent family member(s) | | | Publication date (day/month/year) |
|---|---|---|---|---|---|---|---|
| CN | 117691081 | A | 12 March 2024 | None | | | |
| CN | 116722138 | A | 08 September 2023 | None | | | |
| JP | 2022143506 | A | 03 October 2022 | None | | | |
| CN | 110462896 | A | 15 November 2019 | WO | 2018221263 | A1 | 06 December 2018 |
| | | | | US | 2020161632 | A1 | 21 May 2020 |
| | | | | US | 10868295 | B2 | 15 December 2020 |
| | | | | JPWO | 2018221263 | A1 | 27 June 2019 |
| | | | | JP | 6549807 | B2 | 24 July 2019 |
| | | | | WO | 2018220972 | A1 | 06 December 2018 |
| | | | | KR | 20190120377 | A | 23 October 2019 |
| | | | | KR | 102102094 | B1 | 17 April 2020 |
| | | | | EP | 3633775 | A1 | 08 April 2020 |
| | | | | EP | 3633775 | A4 | 03 March 2021 |
| | | | | EP | 3633775 | B1 | 10 August 2022 |
| CN | 114180648 | A | 15 March 2022 | None | | | |
| CN | 115832221 | A | 21 March 2023 | None | | | |
| CN | 115939318 | A | 07 April 2023 | None | | | |
| CN | 116864677 | A | 10 October 2023 | None | | | |

Form PCT/ISA/210 (patent family annex) (July 2022)